# EUROPÄISCHE PATENTANMELDUNG

(11) **EP 0 766 105 A1**
(43) Veröffentlichungstag der Anmeldung: **02.04.1997**
(21) Anmeldenummer: 96114929.1
(22) Anmeldetag: 18.09.1996
(51) Int. Cl.: G02B 6/14

(54) **Optischer Modenfilter**

(30) Priorität: 26.09.1995 DE 19535685
(71) Anmelder: Alcatel SEL Aktiengesellschaft, D-70435 Stuttgart (DE)
(72) Erfinder: Kersten, Peter, Dr., 71287 Weissach (DE); Aarnio, Jaakko, Dr., 02130 Espoo (FI); Koppenborg, Johannes, 74372 Sersheim (DE)
(74) Vertreter: Pohl, Herbert, Dipl.-Ing

(57) **Zusammenfassung**

Die Erfindung betrifft die Schaffung eines optischen Modenfilters, d.h. eines optischen Bauelementes, in dem sich die Grundmode möglichst ungedämpft ausbreiten kann, in dem aber höhere Moden stark bedämpft werden.

Ein optisches Modenfilter ist dadurch verwirklicht, daß bei einem integriert optischen Wellenleiter nahe dem Wellenleiterkern (3) ein höherbrechender oder absorbierender Werkstoff (4) angeordnet ist.

## Beschreibung

Die Erfindung betrifft eine Vorrichtung zur Verhinderung der Ausbreitung unerwünschter Moden in einem integriert optischen Wellenleiter, bei dem nahe dem die Moden führenden Medium eine die Strahlung absorbierende Schicht mit einem Brechungsindex angeordnet ist, welcher gleich oder größer als der Brechungsindex des die Moden führenden Mediums ist.

Bei integriert optischen Wellenleitern ist es bekannt (DE-A-35 14 413), daß die Ausbreitung unerwünschter Moden mit Sicherheit verhindert wird, wenn zwischen dem Substrat und der lichtführenden Schicht eine die Strahlung absorbierende Zwischenschicht angeordnet ist, deren Brechungsindex geringfügig größer als der Brechungsindex der lichtführenden Schicht ist. Die für einen Monomodebetrieb nicht erwünschten Moden werden beim Durchlaufen der Absorptionsschicht stark bedämpft.

Es sind Absorbierglieder bekannt (DE-C-26 57 595), welche die Aufgabe haben, störende Moden aus dem diese führenden Medium auszukoppeln und zu absorbieren. Das optische Absorbierglied ist über dem die Moden führenden Medium angeordnet und besteht aus einem optisch absorbierenden Werkstoff mit einem Brechungindex, der gleich oder größer als der Brechungsindex des die Moden führenden Werkstoffes ist.

Bekannt sind lichtabsorbierende Werkstoffe mit eingebetteten Ionen von Eisen, Kupfer oder Kobalt.

Das der Erfindung zugrunde liegende technische Problem besteht darin, einen Aufbau eines optischen Modenfilters bei integriert optischen Wellenleitern anzugeben, welcher in einfacher Weise verwirklicht werden kann. Gemäß einem Ausführungsbeispiel der Erfindung wird dieses technische Problem durch einen planaren Wellenleiter mit folgenden Merkmalen gelöst:
a) einem ebenen Substrat,
b) einem in einer Bufferschicht angeordneten Wellenleiterkern,
c) auf wenigstens einer Seite des Wellenleiterkerns ist in der Bufferschicht eine grubenförmige Vertiefung angeordnet,
d) die Vertiefung ist mit dem absorbierenden optischen Werkstoff gefüllt und die Oberfläche der Bufferschicht ist mit einer Schicht des gleichen Werkstoffs bedeckt.

Weitere Lösungen dieses technischen Problems sind in den Ansprüchen 2 bis 4 enthalten. Sie sind nachstehend anhand der Figuren 1 bis 4 erläutert. Es zeigen:
- Fig. 1a: den Querschnitt durch eine Ausführungsform entsprechend der Schnittlinie CD in Fig. 1b,
- Fig. 1b: den Längsschnitt durch das Modenfilter gemäß Fig. 1a entsprechend der Schnittlinie AB,
- Fig. 2: den Querschnitt durch eine andere Ausführungsform eines Modenfilters,
- Fig. 3 und 4: weitere Ausführungsformen eines Modenfilters.

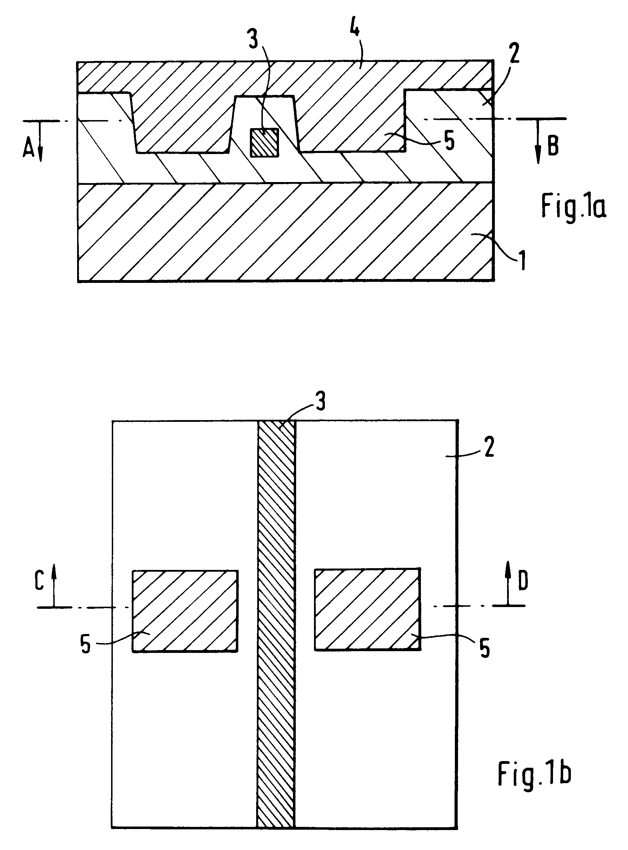

Wie aus den Figuren 1a und 1b zu erkennen ist, ist die dort gezeigte Ausführungsform des Modenfilters auf einem Substrat 1, beispielsweise aus Silizium, aufgebaut. Die Oberfläche des Substrats 1 ist mit einer Bufferschicht 2, beispielsweise aus Siliziumdioxid versehen, in welche der Lichtwellenleiter-Kern 3 eingebettet ist. Darüber ist eine Deckschicht 4 aus einem Polymer angeordnet, welche auch die Vertiefungen 5 ausfüllt, welche zu beiden Seiten des Lichtwellenleiter-Kerns 3 angeordnet sind. Die Vertiefungen 5 sind durch Ätzen in der Bufferschicht 2 erzeugt worden und weisen in etwa die Abmessungen 3 x 5 mm auf.

Wenn der Lichtwellenleiter-Kern 3 aus einem Werkstoff, beispielsweise Siliziumdioxid, mit der Brechzahl von beispielsweise 1.4461, besteht die Brechzahl der Bufferschicht 2 beispielsweise 1.4421 und die Brechzahl der Deckschicht 4 beispielsweise 1.5 beträgt, dann ist die Dämpfung für die höheren Moden einer Betriebswellenlänge von 1300 nm etwa 2 dB/cm.

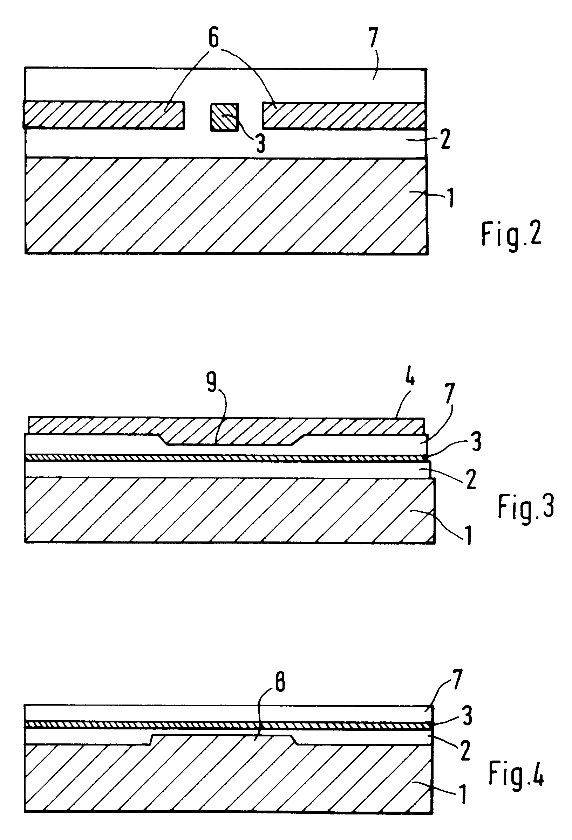

Die in Fig. 2 gezeigte Ausführungsform des Modenfilters besitzt ebenfalls ein Substrat 1, auf dem eine untere Bufferschicht 2, eine Kernschicht 6 und eine obere Bufferschicht 7 angeordnet sind. Bei der Herstellung des Lichtwellenleiter-Kerns 3 ist ein Teil der Kernschicht 6 entfernt und der übrige Teil der Kernschicht 6 erhalten geblieben. Von diesem verbleibenden Teil der Kernschicht 6 werden die höheren Moden stark bedämpft.

In den Figuren 3 und 4 sind Ausführungsbeispiele für vertikale Modenfilter gezeigt. Bei der Ausführungsform gemäß Fig. 3 sind auf dem Substrat 1 eine untere Bufferschicht 2, eine Kernschicht 6, eine obere Bufferschicht 7 und eine Deckschicht 4 angeordnet. Im mittleren Teil des Modenfilters ist die obere Bufferschicht 7 mit einer Verdünnung 9 versehen, so daß dieser Teil als Filter für die höheren Moden dient, wenn für die Schichten Werkstoffe mit den Brechzahlen verwendet werden, wie im Zusammenhang mit dem Ausführungsbeispiel gemäß Fig. 1a und 1b erwähnt.

Das Ausführungsbeispiel gemäß Fig. 4 unterscheidet sich von dem Ausführungsbeispiel gemäß Fig. 3 dadurch, daß die untere Bufferschicht 2 im mittleren Teil dadurch dünner ausgebildet ist, daß das Substrat 1 einen Steg 8 aufweist. Somit wirkt bei diesem Ausführungsbeispiel dieser Teil als Filter für die höheren Moden.

## Patentansprüche

1. Vorrichtung zur Verhinderung der Ausbreitung unerwünschter Moden in einem integriert optischen Wellenleiter, bei dem nahe dem die Moden führenden Medium eine die Strahlung absorbierende Schicht mit einem Brechungsindex angeordnet ist, welcher gleich oder größer als der Brechungsindex des die Moden führenden Mediums ist,
**gekennzeichnet durch** folgende Merkmale:
a) einem ebenen Substrat (1),
b) einem in einer Bufferschicht (2) angeordneten Wellenleiterkern (3),
c) auf wenigstens einer Seite des Wellenleiterkerns (3) ist in der Bufferschicht eine grubenförmige Vertiefung (5) angeordnet,
d) die Vertiefung (5) ist mit dem absorbierenden optischen Werkstoff oder einem Werkstoff mit einem höheren Brechungsindex als dem der Bufferschicht gefüllt und die Oberfläche der Bufferschicht ist mit einer Schicht (4) des gleichen Werkstoffs bedeckt.

2. Vorrichtung nach Anspruch 1,
gekennzeichnet durch folgende Merkmale:
a) einem ebenen Substrat (1),
b) einem innerhalb einer Bufferschicht (2, 7) angeordneten Wellenleiterkern (3),
c) der Wellenleiterkern (3) besteht aus einem Stab mit quadratischem Querschnitt,
d) zu beiden Seiten des stabförmigen Teils des Wellenleiterkerns (3) sind plattenförmige Bereiche (6) aus dem Kernwerkstoff angeordnet.

3. Vorrichtung nach Anspruch 1,
gekennzeichnet durch folgende Merkmale:
a) ein ebenes Substrat (1),
b) einer auf dem Substrat zwischen einer oberen und einer unteren Bufferschicht (2, 7) angeordneten flächenhaften Wellenleiterkern-Schicht (3),
c) einer die obere Bufferschicht abdeckende Schicht (4) mit einer höheren Brechzahl als der der Bufferschicht,
d) die obere Bufferschicht ist mit einer Verdünnung (9) versehen.

4. Vorrichtung nach Anspruch 1,
gekennzeichnet durch folgende Merkmale:
a) ein ebenes Substrat (1) mit einer stegförmigen Erhöhung (8),
b) einer auf dem Substrat zwischen einer oberen und einer unteren Bufferschicht (2, 7) angeordneten flächenhaften Wellenleiterkern-Schicht (3).
